# EUROPEAN PATENT APPLICATION

(11) **EP 1 619 233 A1**
(43) Date of publication of application: **25.01.2006**
(21) Application number: 04717745.6
(22) Date of filing: 05.03.2004
(51) Int. Cl.: C10G 45/08

(54) **METHOD OF HYDROTREATING GAS OIL FRACTION**

(30) Priority: 07.03.2003 JP 2003062365
(71) Applicant: Nippon Oil Corporation, Tokyo 105-8412 (JP)
(72) Inventor: IKI, Hideshi, c/o Nippon Oil Corporation, Yokohama-shi, Kanagawa 231-0815 (JP); SUGIURA, Yukihiro, c/o Nippon Oil Corporation, Yokohama-shi, Kanagawa 231-0815 (JP); TANAKA, Yuichi, c/o Nippon Oil Corporation, Yokohama-shi, Kanagawa 231-0815 (JP); TAKAHASHI, Shinya, c/o Nippon Oil Corporation, Yokohama-shi, Kanagawa 231-0815 (JP)
(74) Representative: Grünecker, Kinkeldey, Stockmair & Schwanhäusser Anwaltssozietät
(86) International application number: PCT/JP2004/002793
(87) International publication number: WO 2004/078886

(57) **Abstract**

The gas oil fraction hydrotreatment process of the invention is **characterized by** using a gas oil fraction with a sulfur content of 0.8-2 % by mass and a total aromatic content of 20-35 % by volume as the feed oil and subjecting the feed oil to hydrotreatment in the presence of a hydrogenation catalyst comprising at least one metal from among Group 6A metals and at least one metal from among Group 8 metals as active metals, and under reaction conditions with a reaction temperature of 330-390°C, a hydrogen partial pressure of 12-20 MPa and a liquid hourly space velocity of 0.1-1 h⁻¹, to obtain an ultralow sulfur and low aromatic gas oil fraction having a sulfur content of not greater than 1 ppm by mass and a total aromatic content of not greater than 1 % by volume. This hydrotreatment process allows production of a "zero sulfur" and "zero aromatic" gas oil fraction in an efficient and reliable manner without provision of special operating conditions or equipment investment.

## Description

### Technical Field

The present invention relates to a gas oil fraction hydrotreatment process.

### Background Art

Demand for cleaner diesel vehicle exhaust gas is becoming increasingly acute in light of issues such as environmental pollution. This has led to adoption of various kinds of environmental regulations, notable among which is regulation regarding the removal of "particulate matter", or fine particles in exhaust gas, and installation of particulate matter removing filters and the like has come to be considered essential.

However, such exhaust gas after-treatment devices have been shown to undergo considerable deterioration when using high-sulfur gas oil. It is therefore highly desirable to maximize the usable life of purification devices, especially for transport trucks which must traverse long running distances, and as a result it has become indispensable to further reduce the sulfur content of gas oil. In addition, it is said that since the aromatic components of gas oil are the major cause of particulate matter production, removal of the aromatic components is effective as a strategy for fundamentally reducing particulate matter. Moreover, since aromatic components are widely recognized as being carcinogenic, when gas oil fractions are used as bases for various solvents or metal working oils there is a risk of worsening of the working environment during handling of solvents, and therefore reduction of aromatic components is also important from this viewpoint.

On the other hand, petroleum-based gas oil fractions contain 1-3 % by mass sulfur when unrefined, and they are used as gas oil stocks after hydrodesulfurization. Other gas oil stocks include the hydrodesulfurized kerosene fraction and cracked gas oil obtained from a fluidized catalytic cracker or hydrocracker unit, and gas oil products are obtained by admixture with such fuel stocks. Among the sulfur compounds present in gas oil fractions which have been hydrodesulfurized with a hydrodesulfurization catalyst, dibenzothiophene derivatives with methyl substituents, such as 4,6-dimethyldibenzothiophene, have very low reactivity and such compounds tend to remain to the end of the process even in the case of hydrodesulfurization to a high depth. Consequently, in order to promote desulfurization to an even lower sulfur content of not greater than 1 ppm by mass by the prior art technology, it is necessary to employ a very high hydrogen partial pressure or to achieve an extremely long contact time, i.e., using an extremely large catalyst volume.

Also, unrefined petroleum-based gas oil fractions generally contain 20-40 % by volume aromatic components, which may exist as monocyclic aromatic compounds or bicyclic or greater condensed aromatic compounds. Furthermore, a chemical equilibrium restriction applies in the aromatic hydrogenation reaction, with the equilibrium shifting to aromatic compounds at the high temperature and cyclic hydrides (naphthenes) at the low temperature. As a result, the lower temperature is favorable for hydrogenation of aromatics, but serious problems remain in that reaction at low temperature requires reaction conditions and a catalyst which will produce a sufficient aromatic hydrogenation reaction rate at the low temperature. Noble metal catalysts are catalysts which exhibit sufficient aromatic hydrogenation activity at low temperature, but the sulfur resistance of such catalysts is not satisfactory, and in cases with a high sulfur content of the feed oil, the hydrogenation activity of the catalyst is inhibited and sufficient aromatic hydrogenation power is not exhibited. However, since hydrodesulfurization reaction is a reaction which eventually ends in cleavage of carbon-sulfur bonds, the reaction is promoted more toward the high temperature. Consequently, setting the reaction conditions to the low temperature to promote aromatic hydrogenation as by prior art techniques results in inadequate desulfurization activity, making it difficult to achieve both an ultralow sulfur content and low aromatic content.

In light of these circumstances, methods for production of low-sulfur and low-aromatic component diesel fuels have been proposed, such as the production techniques which combine two steps, a desulfurization step (first step) with an aromatic-hydrogenation step employing zeolite or a clay mineral as the catalyst (second step), described in Japanese Unexamined Patent Publication HEI No. 7-155610 and Japanese Unexamined Patent Publication HEI No. 8-283747.

### Disclosure of the Invention

However, the effects of reducing the sulfur content and aromatic components by the methods described in the aforementioned publications have been insufficient, and it has not been possible to simultaneously achieve an extremely high desulfurization/dearomatization level to a sulfur content of not greater than 1 ppm by mass and an aromatic content of not greater than 1 % by volume. Specifically, when the degree of severity of the operation in the first step is increased, problems result in that the operation of the first step can no longer be carried out for a period which is satisfactory in economic terms, the aromatic components in the product oil are increased in the first step as a result of the rising reaction temperature, and dearomatization in the second step is inhibited. In addition, the degree of severity of operation has been limited because of the aforementioned aromatic equilibrium restriction in the second step.

It is an object of the present invention, which has been accomplished in light of the problems of the prior art described above, to provide a gas oil fraction hydrotreatment process which allows production of a "zero sulfur" and "zero aromatic" gas oil fraction having a sulfur content of not greater than 1 ppm by mass and a total aromatic content of not greater than 1 % by volume, and with excellent environmental properties, in an efficient and reliable manner without provision of special operating conditions or equipment investment.

As a result of much diligent research directed toward achieving the object stated above, the present inventors have completed the present invention upon discovering that an ultralow sulfur content and low aromatic content can be efficiently and simultaneously achieved by hydrotreatment of a diesel oil fraction having a sulfur content and total aromatic content in prescribed ranges, in the presence of a specific hydrogenation catalyst and under specific reaction conditions.

In other words, the invention provides a gas oil fraction hydrotreatment process characterized by using a gas oil fraction with a sulfur content of 0.8-2 % by mass and a total aromatic content of 20-35 % by volume as the feed oil and subjecting the feed oil to hydrotreatment in the presence of a hydrogenation catalyst comprising at least one metal from among Group 6A metals and at least one metal from among Group 8 metals as active metals, and under reaction conditions with a reaction temperature of 330-390°C, a hydrogen partial pressure of 12-20 MPa and a liquid hourly space velocity of 0.1-1 h⁻¹, to obtain an ultralow sulfur and low aromatic gas oil fraction having a sulfur content of not greater than 1 ppm by mass and a total aromatic content of not greater than 1 % by volume.

The invention provides an ultralow sulfur and low aromatic gas oil fraction having a sulfur content of not greater than 1 ppm by mass and a total aromatic content of not greater than 1 % by volume, characterized by being obtained by the aforementioned process of the invention.

The invention further provides a gas oil composition characterized by comprising an ultralow sulfur and low aromatic gas oil fraction having a sulfur content of not greater than 1 ppm by mass and a total aromatic content of not greater than 1 % by volume, obtained by the aforementioned process of the invention.

Thus, the present inventors have discovered that by using a hydrogenation catalyst comprising a Group 6 metal and a Group 8 metal as active metals for hydrotreatment under a hydrogen partial pressure of 12-20 MPa, in order to simultaneously achieve a sulfur content of not greater than 1 ppm by mass and a total aromatic content of not greater than 1 % by volume for a petroleum-based hydrocarbon oil corresponding to the gas oil fraction, it is possible to efficiently promote desulfurization and dearomatization, and that by limiting the reaction temperature to 330-390°C and the liquid hourly space velocity to 0.1-1.0 h⁻¹, reduction in the diesel fraction by decomposition is adequately inhibited and it is possible to achieve both conditions of a sulfur content of not greater than 1 ppm and a total aromatic content of 1 % by volume or lower.

According to the invention, the ratio of the feed oil and the hydrogen gas co-feeded (hydrogen/oil ratio) for the hydrotreatment is preferably 300-900 NL/L. Setting the hydrogen/oil ratio to within this range will tend to adequately inhibit additional reaction and more efficiently promote the desulfurization and dearomatization reactions.

According to the invention, the hydrotreatment is carried out in a hydrotreatment apparatus provided with at least one reactor, and the volume of hydrogen gas supplied at the inlet of the reactor into which the feed oil is initially introduced (first reactor), of the hydrogen gas accompanying the feed oil for the hydrotreatment, is preferably not greater than 60 % by volume of the total hydrogen gas supply volume.

According to the invention, (i) preferably the feed oil has a monocyclic aromatic content of 9-19 % by volume, a bicyclic aromatic content of 8-13 % by volume and a tricyclic or greater aromatic content of 0.5-4 % by volume, while the ultralow sulfur and low aromatic gas oil fraction has a bicyclic aromatic content of not greater than 0.4 % by volume, and (ii) preferably the feed oil has a paraffin content of 30-60 % by volume and a naphthene content of 25-60 % by volume, while the ultralow sulfur and low aromatic gas oil fraction has a paraffin content of 30-60 % by volume and a naphthene content of 40-70 % by volume.

Also according to the invention, the yield of fractions having a lower boiling point than the boiling point of the feed oil in the hydrotreatment is preferably not greater than 50 % by volume of the total feed oil.

The hydrogenation catalyst used for the invention is preferably one having at least one metal from among Group 6A metals and at least one metal from among Group 8 metals supported as active metals on a porous support, and more preferably the active metals are any combination selected from the group consisting of cobalt-molybdenum, nickel-molybdenum, nickel-tungsten and cobalt-nickel-molybdenum. Also, the total amount of active metals in the hydrogenation catalyst is preferably at least 22 % by mass of the total catalyst, in terms of oxides.

### Best Mode for Carrying Out the Invention

Preferred embodiments of the invention will now be explained in detail.

The feed oil having prescribed properties to be used for the invention will be explained first. According to the invention, a gas oil fraction having a sulfur content of 0.8-2 % by mass and a total aromatic content of 20-35 % by volume is used as the feed oil.

This type of gas oil fraction of the invention is the fraction corresponding to a prescribed boiling point range (150-380°C) obtained from an atmospheric pressure distillation apparatus, but there may also be used a mixture of fractions with corresponding boiling point ranges obtained from a hydrocracker and resid hydrodesulfurization unit. Also, the gas oil-corresponding fractions obtained from a fluidized catalytic cracker (FCC) may be combined, but since the gas oil-corresponding fractions from FCC have greater aromatic contents than each of the aforementioned separate fractions, the mixing proportion is preferably not greater than 40 % by volume and even more preferably not greater than 30 % by volume. Incidentally, the "boiling point range" throughout the present specification is the value measured according to the method described in JIS K 2254, "Petroleum products - Determination of distillation characteristics".

The sulfur content of the feed oil used for the invention is 0.8-2 % by mass and preferably 0.9-1.8 % by mass, and more preferably 1.0-1.6 % by mass. If the sulfur content of the feed oil is greater than 2 % by mass, the sulfur content is not sufficiently reduced even with hydrotreatment, making it impossible to achieve an ultralow sulfur content, while if it is less than 0.8 % by mass, the necessary reaction temperature is lower and the aromatic hydrogenation reaction does not proceed in a satisfactory fashion. The "sulfur content" through the present specification is the sulfur content by mass based on the total gas oil fraction, measured according to the method described in JIS K 2541, "Crude oil and petroleum products-Determination of sulfur content" or ASTM-D5453.

The total aromatic content of the feed oil used for the invention is 20-35 % by volume, and preferably 21-30 % by volume. If the total aromatic content of the feed oil is greater than 35 % by volume, a long contact time, or an excessively large reactor volume, will be required to achieve a total aromatic content of not greater than 1 % by volume, thereby increasing equipment investment costs, while if it is less than 20 % by volume the operating conditions necessary for aromatic hydrogenation will be in excess over desulfurization, thereby reducing the economic advantage of the invention.

The aromatic composition of the feed oil of the invention is preferably a monocyclic aromatic content of 9-19 % by volume, a bicyclic aromatic content of 8-13 % by volume and a tricyclic or greater aromatic content of 0.5-4 % by volume, and more preferably a monocyclic aromatic content of 10.5-15 % by volume, a bicyclic aromatic content of 9-11.5 % by volume and a tricyclic or greater aromatic content of 1.0-3.8 % by volume. If the monocyclic, bicyclic and tricyclic or greater aromatic contents of the feed oil are above the aforementioned upper limits, a large equipment investment tends to be needed to achieve the total aromatic content of not greater than 1 % by volume and the bicyclic or greater aromatic content of not greater than 0.4 % by volume, while if they are below the aforementioned lower limits, the operating conditions necessary for aromatic hydrogenation will be in excess over desulfurization, thereby reducing the economic advantage of the invention.

The total aromatic content, monocyclic aromatic content, bicyclic aromatic content and tricyclic or greater aromatic content throughout the present specification are the volume percentages (% by volume) for the respective aromatic contents as measured according to the method described in JPI-5S-49-97, "Petroleum products-Determination of hydrocarbon types-High performance liquid chromatography", in *Index on Testing Method for Petroleum Products* published by The Japan Petroleum Institute.

From the viewpoint of maintaining fuel oil density of the gas oil product to improve fuel consumption, the composition other than the aromatic portion of the feed oil of the invention preferably includes a paraffin content of 30-60 % by volume, a naphthene content of 25-60 % by volume and an olefin content of not greater than 1 % by volume. The naphthene content, paraffin content and olefin content throughout the present specification are the respective volume percentages (% by volume) as measured according to the method described in ASTM D2786-91, "Standard Test Method for Hydrocarbon Types Analysis of Gas-Oil Saturates Fractions by High Ionizing Voltage Mass Spectrometry".

According to the invention, a feed oil (gas oil fraction) having a sulfur content and total aromatic content in prescribed ranges is subjected to hydrotreatment in the presence of a hydrogenation catalyst to obtain an ultralow sulfur and low aromatic gas oil fraction having a sulfur content of not greater than 1 ppm by mass and a total aromatic content of not greater than 1 % by volume.

According to the invention, hydrotreatment of the feed oil is carried out in the presence of a hydrogenation catalyst, and the catalyst used for the invention comprises as active metals at least one metal from among Group 6A metals and at least one metal from among Group 8 metals, with the active metals preferably supported on a porous support.

As an active metal for the catalyst for hydrotreatment there may be used a combination of at least one metal from among Group 8 metals and at least one metal from among Group 6A metals. If a Group 8 metal is not included in the catalyst the desulfurization activity is inadequate, and if a Group 6A metal is not included virtually no desulfurization activity is exhibited, or the activity drastically deteriorates due to contamination of the active metal by sulfur in the feed oil. As Group 8 metals there may be mentioned cobalt, nickel, palladium, platinum and ruthenium, as Group 6A metals there may be mentioned chromium, molybdenum and tungsten, and particularly preferred combinations of Group 8 metals and Group 6A metals are combinations selected from the group consisting of cobalt-molybdenum, nickel-molybdenum, nickel-tungsten and cobalt-nickel-molybdenum, from the viewpoint of desulfurization and aromatic hydrogenation activity, and of resistance against contamination by sulfur in the feed oil. The metal sources used may be ordinary inorganic salts or chelated salt compounds, and the loading method may be any loading method ordinarily used with hydrogenation catalysts, such as impregnation or ion-exchange methods. For loading of different metals onto the porous support, a mixed solution may be used for simultaneous loading, or single solutions may be used for successive loading. The metal salt solution may be in the form of an aqueous solution or a water-soluble organic solvent solution, while a non-water-soluble organic solvent may even be used. Phosphorus may also be loaded in addition the active metal.

The loading weight of the active metals for the catalyst used for hydrogenation is preferably at least 22 % by mass and more preferably at least 24 % by mass based on total metal weight with respect to the total catalyst weight. If the loading weight of the active metals is below the aforementioned lower limit, the desulfurization and aromatic hydrogenation reaction in the hydrotreatment will tend to be insufficient. There are no particular restrictions on the respective amounts of Group 6A metals and Group 8 metals, but the loading weight of Group 8 metals is preferably 2-8 % by mass as oxides with respect to the total catalyst weight, and the loading weight of Group 6A metals is preferably 15-25 % by mass as oxides with respect to the total catalyst weight. When phosphorus is also loaded, the phosphorus loading weight is preferably 0.5-5 % by mass as oxides with respect to the total catalyst weight.

The carrier for the hydrogenation catalyst of the invention is preferably a porous carrier, and particularly preferred porous carriers are those composed mainly of γ-alumina. As carrier constituent components in addition γ-alumina there are preferred silica, silica-alumina, boria, magnesia and compound oxides thereof, and phosphorus may also be included. The γ-alumina content is preferably at least 70 % by mass of the total catalyst. If the γ-alumina content is less than 70 % by mass, the acidic nature of the carrier will vary considerably, and reduction in activity due to coke production will be notable. The γ-alumina as the main component of the carrier may be obtained from an alumina intermediate obtained by a method of neutralizing or hydrolyzing an aluminum salt or aluminate salt, or an alumina intermediate obtained by a method of hydrolyzing an aluminum amalgam or an aluminum alcoholate, or alternatively it may be obtained using a commercially available alumina intermediate or boehmite powder.

The loading of the metal onto the carrier may be accomplished after completion of the entire process of preparing the carrier, or the aforementioned metal salt may be combined therewith at an appropriate hydroxide state during an intermediate step of the carrier preparation process. The carrier on which the metal is loaded in this manner may be used after drying at 100°C or higher, or it may be used after firing at a high temperature of 300°C or higher in air or an inert gas.

The mean pore size of the catalyst of the invention is preferably 30-100 Å, and more preferably 50-90 Å. If the mean particle size of the catalyst is smaller than this lower limit, the intrapore diffusion of the reaction molecules will tend to be insufficient, while if it is greater than the upper limit, the surface area of the catalyst will decrease, tending to reduce the catalyst activity. The pore volume of the catalyst is preferably at least 0.3 ml/g, because if the pore volume is less than 0.3 ml/g the metal impregnation into the catalyst will tend to be difficult. The surface area of the catalyst is preferably at least 200 m²/g. The surface area of the catalyst is preferably as high as possible, and if the surface area of the catalyst is smaller than 200 m²/g the area for loading of the metal will be reduced, tending to lower the activity. The surface area and pore volume of the catalyst throughout the present specification are measured by the "BET" method using nitrogen.

The hydrogenation catalyst according to the invention may be used after pre-sulfiding by the same method commonly used for hydrodesulfurization catalysts. Specifically, for example, a feed oil which is straight-run gas oil alone or a straight-run gas oil containing an added sulfurizing agent, may be used under hydrogen pressurization and with heating at 200°C according to a prescribed procedure for sulfiding of the active metal on the catalyst, which will tend to provide sufficient activity. As such sulfiding catalysts there may be used sulfur compounds such as dimethyl disulfide, polysulfides and the like. Also, a catalyst that is already pre-sulfided in manufacturing, or a catalyst subjected to activation treatment with a sulfur-containing, oxygen-containing or nitrogen-containing organic solvent may be used.

The conditions for hydrotreatment according to the invention are preferably a reaction temperature of 330-390°C, a hydrogen partial pressure of 12-20 MPa and a liquid hourly space velocity (LHSV) of 0.1-1 h⁻¹, more preferably a reaction temperature of 340-385°C, a hydrogen partial pressure of 13-19.5 MPa and a liquid hourly space velocity (LHSV) of 0.15-0.8 h⁻¹, and most preferably a reaction temperature of 345-380°C, a hydrogen partial pressure of 14-19 MPa and a liquid hourly space velocity (LHSV) of 0.2-0.7 h⁻¹. A higher reaction temperature and hydrogen partial pressure will favor the hydrogenation reaction, but if the hydrogen partial pressure and reaction temperature are excessively increased, addition of the hydrogen sulfide to reaction of the hydrogen sulfide by-product to the hydrocarbons produces new sulfur compounds, and desulfurization to a sulfur content of below 1 ppm by mass cannot be achieved. Specifically, if the reaction temperature is below the aforementioned lower limit the desulfurization reaction may not adequately proceed, while if the reaction temperature is above the aforementioned upper limit the desulfurization reaction is inhibited due to reduction of the gas oil fraction as a result of decomposition, and addition of the hydrogen sulfide to hydrocarbons. Also, if the hydrogen partial pressure is below the aforementioned lower limit the desulfurization and aromatic hydrogenation reactions may not proceed sufficiently, whereas if the hydrogen partial pressure is above the aforementioned upper limit, the desulfurization reaction is inhibited due to reduction of the gas oil fraction as a result of decomposition, and addition reaction of the hydrogen sulfide by-product. A lower liquid hourly space velocity (LHSV) will tend to favor the desulfurization and hydrogenation reactions, but if the liquid hourly space velocity is below the aforementioned lower limit an extremely large reactor volume will be required, resulting in a large equipment investment, whereas if the liquid hourly space velocity is above the aforementioned upper limit, the desulfurization and aromatic hydrogenation reactions will not proceed sufficiently.

The ratio of the feed oil and the companion hydrogen gas (hydrogen/oil ratio) for the hydrotreatment is preferably 300-900 NL/L, and more preferably 350-600 NL/L. A higher hydrogen/oil ratio will favor both the desulfurization and hydrogenation reactions, but if the hydrogen/oil ratio is below the aforementioned lower limit the desulfurization and aromatic hydrogenation reactions may not proceed sufficiently, whereas if the hydrogen/oil ratio is above the aforementioned upper limit, an expensive gas compressor or the like may be necessary, thus producing an economically undesirable situation in which large equipment investment is required and hydrogen is excessively consumed.

The apparatus for hydrotreatment of the feed oil may have any construction, with either a single reactor or a plural reactors, and the apparatus may be provided with devices for gas-liquid separation or hydrogen sulfide removal at a pre-stage of the reactor or between different columns, for the purpose of lowering the hydrogen sulfide concentration in the reactor.

The reaction system of the hydrotreatment apparatus is preferably a fixed-bed system. Specifically, the hydrogen flow system may be in cocurrent or countercurrent with the feed oil, or a system with a combination of cocurrent and countercurrent may be employed using a plural reactors. An ordinary flow system is usually a downflow type, which may be a gas-liquid cocurrent system. The reactor may be composed of a plurality of catalyst beds, and hydrogen gas may be injected between catalyst beds as quench gas, for the purpose of reaction heat removal or hydrogen partial pressure increase.

Hydrogen gas is also supplied to accompany the feed oil in the hydrotreatment of the invention, where the method of injecting the hydrogen gas is a method of injection:
(1) at the inlet of the first reactor (the reactor into which the feed oil is initially introduced), or
(2) between different catalyst beds, or in the case of a plural reactors, between the reactors.
   According to the invention, (1) may be implemented alone, or any method implementing both (1) and (2) may be used, but preferably a method of injecting the hydrogen gas by both (1) and (2) is employed. Also, in order to more reliably remove the hydrogen sulfide by-product and more efficiently promote desulfurization and aromatic hydrogenation, preferably no more than 60 % by volume of the total injected hydrogen gas is injected by (1), with the remaining hydrogen gas being injected by (2). More suitably, the hydrogen gas injected by (1) is preferably not greater than 55 % by volume, more preferably not greater than 40 % by volume and most preferably not greater than 30 % by volume of the total injected hydrogen gas. That is, a larger volume of hydrogen gas remaining to be injected by (2) will tend to more efficiently exhibit the effect of adding the hydrogen gas. Incidentally, the "inlet of the first reactor" may be before the heating furnace which heats the feed oil to the prescribed temperature, or at the outlet of the heating furnace.

Thus, according to the invention the aforementioned feed oil having prescribed properties is hydrotreated in the presence of a hydrogenation catalyst and under prescribed reaction conditions, so that the ultralow sulfur and low aromatic gas oil fraction of the invention having a sulfur content of not greater than 1 ppm by mass and a total aromatic content of not greater than 1 % by volume is efficiently and reliably obtained without provision of special operating conditions or equipment investment.

Although the reason for which such an ultralow sulfur and low aromatic gas oil fraction is obtained by the process of the invention is not fully understood, the present inventors conjecture as follows. That is, typical sulfur compounds present in petroleum-based hydrocarbon gas oil fractions have the structure of dibenzothiophene derivatives. Among these, derivatives having substituents at the 4,6-position next to the sulfur atom have very low reactivity due to steric hindrance. Thus, since sulfur residue tends to remain even with increased severity of hydrodesulfurization, it is very difficult to achieve a sulfur content of not greater than 1 ppm by mass and an aromatic content of not greater than 1 % by volume by direct hydrotreatment of the feed oil; however, by using a hydrogenation catalyst comprising both a Group 6A metal and a Group 8 metal and conducting the hydrotreatment under conditions with a reaction temperature of 330-390°C, a hydrogen partial pressure of 12-20 MPa and a liquid hourly space velocity (LHSV) of 0.1-1 h⁻¹, the desulfurization reaction and aromatic hydrogenation reaction are simultaneously promoted in a surprisingly highly efficient manner. This is because setting a high hydrogen partial pressure shifts the aromatic hydrogenation equilibrium reaction toward the hydrogenated naphthene end. Also, the hydrodesulfurization reaction converts the sulfur portion into hydrogen sulfide. If the hydrogen pressure and reaction temperature are simply raised to an excessive degree, addition reaction of the hydrogen sulfide by-product to the hydrocarbons will produce new sulfur compounds, making it exceedingly difficult to achieve desulfurization to a sulfur content of not greater than 1 ppm by mass. According to the present invention, however, the liquid hourly space velocity is set as explained above and the hydrogen/oil ratio is also set to 300-900 NL/L, so that the residual hydrogen sulfide in the system can be effectively removed and the addition reaction can be adequately inhibited to efficiently and reliably promote the desulfurization and aromatic hydrogenation reaction. Consequently, it is the conjecture of the present inventors that this makes it possible to simultaneously achieve a sulfur content of not greater than 1 ppm by mass and a total aromatic content of not greater than 1 % by volume, as a feature which has not been possible by the

### prior art.

The ultralow sulfur and low aromatic gas oil fraction of the invention corresponds to an ultra-clean diesel fuel with a sulfur content of not greater than 1 ppm by mass and a total aromatic content of not greater than 1 % by volume, obtained by the aforementioned process of the invention. Such an ultralow sulfur and low aromatic gas oil fraction can adequately prevent production of particulate matter in diesel vehicle exhaust gas, while extending the usable life of the exhaust gas purification device without reducing fuel consumption.

The bicyclic or greater aromatic content of the ultralow sulfur and low aromatic gas oil fraction of the invention can be reduced to not greater than 0.4 % by volume, more preferably not greater than 0.3 % by volume and especially not greater than 0.2 % by volume, with the remaining aromatic components consisting entirely of monocyclic aromatic components. Thus, the ultralow sulfur and low aromatic gas oil fraction of the invention preferably has a very low residue of bicyclic or greater aromatic components as well as a low total aromatic component content, because a bicyclic or greater aromatic content of greater than 0.4 % by volume is undesirable from the standpoint of preventing production of particulate matter.

The aromatic components are converted to naphthenes and paraffins during the hydrotreatment of the invention, but most are converted to naphthenes. From the viewpoint of reducing environmental load and maintaining fuel oil density, i.e. fuel consumption, the composition other than the aromatic portion of the ultralow sulfur and low aromatic gas oil fraction of the invention preferably includes a paraffin content of 30-60 % by volume, a naphthene content of 40-70 % by volume and an olefin content of not greater than 1 % by volume.

When the distillation ranges of the feed oil fraction and product oil fraction of the invention are compared, the yield of fractions with a boiling point lower than the boiling point range of the feed oil is preferably not greater than 50 % by volume, more preferably not greater than 40 % by volume and even more preferably not greater than 30 % by volume of the total feed oil volume. According to the invention, this is preferred in order to adequately prevent yield reduction, from the standpoint of maximally inhibiting decomposition of the feed oil, and thus also from an economic standpoint.

The ultralow sulfur and low aromatic gas oil fraction described above may be used alone as a diesel fuel, but other components such as fuel stocks may be added to the ultralow sulfur and low aromatic gas oil fraction as a gas oil composition for use as a diesel fuel according to the invention. That is, a gas oil composition according to the invention is characterized by comprising an ultralow sulfur and low aromatic gas oil fraction having a sulfur content of not greater than 1 ppm by mass and a total aromatic content of not greater than 1 % by volume, obtained by the aforementioned process of the invention. When a gas oil composition of the invention is used as a diesel fuel as well, the excellent properties of the ultralow sulfur and low aromatic gas oil fraction of the invention allow fuel consumption to be maintained while adequately preventing particulate matter in diesel vehicle exhaust gas, and easily extending the usable life of the exhaust gas purification device.

Other fuel stocks which may be included in a gas oil composition of the invention include gas oil bases and kerosene bases other than the ultralow sulfur and low aromatic gas oil fraction of the invention, and more specifically, there may be combined straight-run gas oil, vacuum gas oil, hydrodesulfurized gas oil, hydrocracked gas oil, straight-run kerosene, hydrocracked kerosene, and the like, as well as synthetic gas oils or synthetic kerosenes obtained by Fisher-Tropsch reaction and related reactions using as the starting material "synthetic gas" composed of hydrogen and carbon monoxide. These synthetic kerosenes or synthetic gas oils are characterized by consisting primarily of saturated hydrocarbons, with virtually no aromatic components. The process for production of a synthetic gas may be any publicly known process, and is not particularly restricted. The synthetic gas oil content is preferably not greater than 30 % by volume, more preferably not greater than 20 % by volume and even more preferably not greater than 10 % by volume of the gas oil composition. The synthetic kerosene content is preferably not greater than 60 % by volume, more preferably not greater than 50 % by volume and even more preferably not greater than 40 % by volume of the gas oil composition.

The ultralow sulfur and low aromatic gas oil fraction of the invention may be used not only as a diesel fuel, but also as the base oil for a solvent such as an ink solvent, cleaning solvent, insecticide solvent, aerosol solvent, solution or suspension polymerization solvent, degreasing agents, lacquer solvent, washing solvent, extraction solvent or paint solvent, or as a rubber solvent, metal part cleaning solvent, oil for metal working such as aluminum rolling, rustproofing oil, car coating solvent or the like.

### [Examples]

The present invention will now be explained in greater detail through examples and comparative examples, with the understanding that these examples are in no way limitative on the invention.

### (Example 1)

In γ-alumina (Condea Co., Ltd.) shaped into the form of a cylinder with a 1.5 mm diameter, there were loaded nickel and molybdenum by a pore-filling method using a mixed solution obtained by dissolving nickel nitrate, ammonium molybdenate and aqueous phosphoric acid in distilled water, in an amount matching the pore volume fraction of the catalyst carrier, for a nickel content of 5 % by mass, a molybdenum content of 20 % by mass and a phosphorus content of 2 % by mass in terms of each oxide with respect to the total catalyst, to obtain a hydrogenated catalyst with a surface area of 225 m²/g, a pore volume of 0.45 ml/g and a mean pore diameter of 80 A.

Next, 80 ml of the obtained catalyst was packed into each of two reaction tubes (20 mm inner diameter) and each reaction tube was combined in series. A straight-run gas oil (3 % by mass of sulfur content) containing dimethyl disulfide was used for pre-sulfiding of the catalyst for 4 hours under conditions with a catalyst layer mean temperature of 300°C, a hydrogen partial pressure of 6 MPa, an LHSV of 1h⁻¹ and a hydrogen/oil ratio of 200 NL/L.

After the pre-sulfiding, the feed oil shown in Table 1 (straight-run gas oil fraction obtained from Middle East crude oil, initial boiling point of 275°C, sulfur content of 1.40 % by mass) was subjected to a run under reaction conditions with a reaction temperature of 350°C, a hydrogen partial pressure of 16.5 MPa, an LHSV of 0.5 h⁻¹ and a hydrogen/oil ratio of 500 NL/L, for a hydrotreatment test.

The sulfur content of the product oil obtained by the 10th day after start of the hydrotreatment test was 0.6 ppm by mass, the total aromatic content was 0.8 % by volume, and the bicyclic or greater aromatic content was 0.1 % by volume. Also, it was confirmed that the 50 % by volume running point for the product oil was 304°C, and that at least 50 % by volume of the product oil had not been rendered lighter than the feed oil. The properties of the feed oils used and the obtained product oils are shown in Table 1. In Table 1, IBP is the initial boiling point as defined by JIS K2254, and EP is the end point as defined by JIS K2254.

**Table 1**

| | | Example 1 | Example 2 | Comp. Ex.1 |
|---|---|---|---|---|
| | Feed oil | (Product oil) | (Product oil) | (Product oil) |
| Sulfur content ppm by mass | 14000 | 0.6 | 0.3 | 1.3 |
| IBP °C | 275 | 245 | 250 | 181 |
| 50% °C | 312 | 304 | 306 | 271 |
| EP °C | 359 | 355 | 355 | 351 |
| Saturation % by volume | 82.1 | 99.1 | 99.4 | 95.5 |
| Paraffins % by volume | 51.1 | 53.1 | 52.3 | 58.0 |
| Naphthenes % by volume | 21.8 | 46.0 | 47.1 | 40.1 |
| Olefins % by volume | 0.0 | 0.1 | 0.0 | 0.0 |
| Aromatic components % by volume | 27.1 | 0.8 | 0.6 | 1.9 |
| Monocyclic % by volume | 16.1 | 0.7 | 0.5 | 1.7 |
| Bicyclic % by volume | 8.9 | 0.1 | 0.1 | 0.2 |
| Tricyclic or greater % by volume | 2.1 | 0.0 | 0.0 | 0.0 |

### (Example 2)

A hydrotreatment test was then carried out in the same manner as Example 1, except for using reaction conditions with a reaction temperature of 340°C, a hydrogen partial pressure of 16.5 MPa, an LHSV of 0.5 h⁻¹ and a hydrogen/oil ratio of 500 NL/L, and injecting hydrogen gas through the first reaction tube inlet at 150 NL/L and between the first reaction tube and second reaction tube at 350 NL/L.

The sulfur content of the product oil obtained by the 10th day after start of the hydrotreatment test was 0.3 ppm by mass, the total aromatic content was 0.6 % by volume, and the bicyclic or greater aromatic content was 0.1 % by volume. The properties of the obtained product oil are shown in Table 1.

### (Comparative Example 1)

A hydrotreatment test was then carried out in the same manner as Example 1, except for using reaction conditions with a reaction temperature of 390°C, a hydrogen partial pressure of 18 MPa, an LHSV of 1.2 h⁻¹ and a hydrogen/oil ratio of 200 NL/L.

The sulfur content of the product oil obtained by the 10th day after start of the hydrotreatment test was 1.3 ppm by mass, the total aromatic content was 1.9 % by volume, and the bicyclic or greater aromatic content was 0.2 % by volume. The properties of the obtained product oil are shown in Table 1.

Clearly from the results shown in Table 1, it was confirmed that the strict conditions of a sulfur content of not greater than 1 ppm by mass and a total aromatic content of not greater than 1 % by volume can be simultaneously achieved by hydrotreatment of a feed oil having prescribed properties, in the presence of the aforementioned hydrogenation catalyst and under specific reaction conditions (Examples 1 and 2). Furthermore, based on comparison of Example 1 and Comparative Example 1 it has been confirmed that the liquid hourly space velocity and hydrogen/oil ratio are important factors for promoting removal of sulfur components. It was also confirmed that the decomposition not greater than 50 % by volume of the feed oil could be inhibited.

### Industrial Applicability

As explained above, the present invention allows production of a gas oil fraction having a sulfur content of not greater than 1 ppm by mass and a total aromatic content of not greater than 1 % by volume, and with excellent environmental properties, in an efficient and reliable manner without provision of special operating conditions or equipment investment.

## Claims

1. A gas oil fraction hydrotreatment process **characterized by** using a gas oil fraction with a sulfur content of 0.8-2 % by mass and a total aromatic content of 20-35 % by volume as the feed oil, and subjecting said feed oil to hydrotreatment in the presence of a hydrogenation catalyst comprising at least one metal from among Group 6A metals and at least one metal from among Group 8 metals as active metals, and under reaction conditions with a reaction temperature of 330-390°C, a hydrogen partial pressure of 12-20 MPa and a liquid hourly space velocity of 0.1-1 h⁻¹, to obtain an ultralow sulfur and low aromatic gas oil fraction having a sulfur content of not greater than 1 ppm by mass and a total aromatic content of not greater than 1 % by volume.

2. A gas oil fraction hydrotreatment process according to claim 1, **characterized in that** said feed oil has a monocyclic aromatic content of 9-19 % by volume, a bicyclic aromatic content of 8-13 % by volume and a tricyclic or greater aromatic content of 0.5-4 % by volume, and said ultralow sulfur and low aromatic gas oil fraction has a bicyclic or greater aromatic content of not greater than 0.4 % by volume.

3. A gas oil fraction hydrotreatment process according to claim 1 or 2, **characterized in that** the ratio of the feed oil and the hydrogen gas co-feeded (hydrogen/oil ratio) for said hydrotreatment is 300-900 NL/L.

4. A gas oil fraction hydrotreatment process according to any one of claims 1 to 3, **characterized in that** said hydrotreatment is carried out in a hydrotreatment apparatus provided with at least one reactor, and the volume of hydrogen gas supplied at the inlet of the reactor into which said feed oil is initially introduced, of the hydrogen gas accompanying the feed oil for said hydrotreatment, is not greater than 60 % by volume of the total hydrogen gas supply volume.

5. A gas oil fraction hydrotreatment process according to any one of claims 1 to 4, **characterized in that** said feed oil has a paraffin content of 30-60 % by volume and a naphthene content of 25-60 % by volume, while said ultralow sulfur and low aromatic gas oil fraction has a paraffin content of 30-60 % by volume and a naphthene content of 40-70 % by volume.

6. A gas oil fraction hydrotreatment process according to any one of claims 1 to 5, **characterized in that** the yield of fractions having a lower boiling point than the boiling point of said feed oil in said hydrotreatment is not greater than 50 % by volume of the total feed oil.

7. A gas oil fraction hydrotreatment process according to any one of claims 1 to 6, **characterized in that** said hydrogenation catalyst is one having at least one type of metal from among Group 6A metals and at least one type of metal from among Group 8 metals as active metals supported on a porous support.

8. A gas oil fraction hydrotreatment process according to any one of claims 1 to 7, **characterized in that** said active metals are any combination selected from the group consisting of cobalt-molybdenum, nickel-molybdenum, nickel-tungsten and cobalt-nickel-molybdenum.

9. A gas oil fraction hydrotreatment process according to any one of claims 1 to 8, **characterized in that** the total amount of said active metals in said hydrogenation catalyst is at least 22 % by mass of the total catalyst, in terms of oxides.

10. An ultralow sulfur and low aromatic gas oil fraction having a sulfur content of not greater than 1 ppm by mass and a total aromatic content of not greater than 1 % by volume, **characterized by** being obtained by a process according to any one of claims 1 to 9.

11. A gas oil composition **characterized by** comprising an ultralow sulfur and low aromatic gas oil fraction having a sulfur content of not greater than 1 ppm by mass and a total aromatic content of not greater than 1 % by volume, and obtained by a process according to any one of claims 1 to 9.
